# EUROPEAN PATENT APPLICATION

(11) **EP 3 336 413 A1**
(43) Date of publication of application: **20.06.2018**
(21) Application number: 17812517.5
(22) Date of filing: 22.05.2017
(51) Int. Cl.: F21S 8/04, H05B 33/08, F21V 33/00

(54) **CEILING LIGHT WITH BLUETOOTH SPEAKER**

(30) Priority: 16.06.2016 CN 201610435695
(71) Applicant: Shenzhen JBT Smart Lighting Co., Ltd., Shenzhen, Guangdong 518104 (CN)
(72) Inventor: ZHANG, Wenbin, Shenzhen Guangdong 518104 (CN); CHEN, Huiping, Shenzhen Guangdong 518104 (CN); GUO, Guangli, Shenzhen Guangdong 518104 (CN); HUANG, Xin, Shenzhen Guangdong 518104 (CN); PENG, Zhiguang, Shenzhen Guangdong 518104 (CN)
(74) Representative: Behr, Wolfgang
(86) International application number: PCT/CN2017/085319
(87) International publication number: WO 2017/215406

(57) **Abstract**

A Bluetooth audio ceiling light includes a mask (10) defining an opening (101) at a central axis of the mask (10); a bottom board (11) connected to the mask (10) to form an accommodating cavity; a light board (12) disposed in the accommodating cavity and in contact with an inner side of the bottom board (11); a Bluetooth audio housing (13), an upper side of the Bluetooth audio housing (13) defining an acoustic hole (131), an outer edge of the acoustic hole (131) is attached to an edge of the opening (101), and a lower side of the Bluetooth audio housing (13) is connected to the inner side of the bottom board (11). By means of the Bluetooth wireless control technology functions of ceiling light such as remote controlling the brightness of the ceiling light, adjusting the color, timing, music-controlling colors, scene modes, and so on, to facilitate people's life and increase the diversification and fun of the intelligent home lighting.

## Description

### FIELD

The present invention relates to the technical field of panel lights, and in particular, to Bluetooth audio ceiling lights.

### BACKGROUND

With the popularity of LED technology, more and more LED lights are used in people's life. Currently on the market, almost all wireless dimming and color temperature adjusting ultra-thin ceiling lights employ radio frequency control technology, which has a weak anti-interference ability, networking inconvenience, mediocre reliability, and cannot achieve scenario modes, music-controlling colors, and other functions. Moreover, in conventional art, there is a technical bottleneck in integrating the lighting function of the light and the Bluetooth communication function.

### TECHNICAL PROBLEM

An object of the present disclosure is to provide a Bluetooth audio ceiling light to solve the problems that are the difficulty of realizing a remote diversification operation of the lights, the technical bottleneck in integrating the lighting function of the light and the Bluetooth communication function, and the non-achieving functions such as the scenario modes and music-controlling colors.

### TECHNICAL SCHEME

The technical solution of the present disclosure is implemented as follows.

The present disclosure provides a Bluetooth audio ceiling light, comprising:
a mask defining an opening at a central axis of the mask;
a bottom board connected to the mask to form an accommodating cavity;
a light board disposed in the accommodating cavity and in contact with an inner side of the bottom board;
a Bluetooth audio housing, an upper side of the Bluetooth audio housing defining an acoustic hole, an outer edge of the acoustic hole is attached to an edge of the opening, and a lower side of the Bluetooth audio housing is connected to the inner side of the bottom board.

The Bluetooth audio ceiling light of the present disclosure further comprises:
a control module disposed in the Bluetooth audio housing;
a Bluetooth mesh module configured for receiving an external control signal via Bluetooth, coupled to the control module;
an audio unit disposed inside the Bluetooth audio housing and adjacent to the acoustic hole, and coupled to the control module;
a light-emitting unit disposed on the light board;
a Bluetooth control circuit configured for controlling the light-emitting unit, coupled to the control module and the light-emitting unit.

The Bluetooth audio ceiling light of the present disclosure further comprises:
a power source driving unit configured for connecting to a utility power and providing a direct current (DC), disposed inside the Bluetooth audio housing, and coupled to the light-emitting unit;
a power supply unit configured for decreasing a voltage of the DC of the power source driving unit, disposed inside the Bluetooth audio housing, and coupled to the power source driving unit, the control module, and the audio unit.

In the Bluetooth audio ceiling light of the present disclosure, the Bluetooth control circuit includes:
a first Bluetooth welding pad coupled to a plurality of pins of the control module and coupled to a Bluetooth power module;
a plurality of MOS tubes respectively coupled to a plurality of terminals of the first Bluetooth welding pad;
a second Bluetooth welding pad coupled to the light-emitting unit, the plurality of MOS tubes are respectively coupled to a plurality of terminals of the second Bluetooth welding pad.

In the Bluetooth audio ceiling light of the present disclosure, the light-emitting unit includes a cell welding pad, a plurality of cold color temperature LED monochromatic lights, a plurality of warm color temperature LED monochromatic lights, and a plurality of RGB lights.

Each RGB light includes a R light, a G light, and a B light.

The cell welding pad includes a plurality of cathode terminals and one anode terminal. The plurality of cathode terminals and the anode terminal are respectively coupled to the second Bluetooth welding pad. The plurality of cathode terminals are respectively coupled to one ends of the plurality of cold color temperature LED monochromatic lights, the plurality of warm color temperature LED monochromatic lights, the plurality of R lights, the plurality of G lights, and the plurality of B lights. The anode terminal is coupled to the power source driving unit, and coupled to another ends of the plurality of cold color temperature LED monochromatic lights, the plurality of warm color temperature LED monochromatic lights, the plurality of R lights, the plurality of G lights, and the plurality of B lights.

The Bluetooth audio ceiling light of the present disclosure further comprises a radio frequency module coupled to the control module.

In the Bluetooth audio ceiling light of the present disclosure, the radio frequency module includes:
a radio frequency circuit coupled to the control module; and
a radio frequency antenna coupled to the radio frequency circuit.

In the Bluetooth audio ceiling light of the present disclosure, the power source driving unit comprises:
an alternating current (AC) input end configured for connecting to the utility power;
a rectification circuit coupled to the AC input end;
a filter circuit coupled to the rectification circuit;
a drive control circuit coupled to the filter circuit;
a DC output circuit coupled to the drive control circuit.

In the Bluetooth audio ceiling light of the present disclosure, the power supply unit includes:
a voltage decreasing buck circuit coupled to the DC output circuit;
a voltage regulating circuit coupled to the control module.

In the Bluetooth audio ceiling light of the present disclosure, the light board and the Bluetooth audio housing are fastened to the inner side of the bottom board by screws.

### BENEFICIAL EFFECT

Therefore, the beneficial effect of the present disclosure is to realize the functions of remotely controlling the brightness of the ceiling light, adjusting the color, timing, music-controlling colors, scene modes, and so on, through Bluetooth wireless control technology to facilitate people's life and increase the diversification and fun of the intelligent home lighting.

### BRIEF DESCRIPTION OF THE DRAWINGS

The present disclosure will be further described with reference to the accompanying drawings and embodiments, and in the accompanying drawings:
FIG. 1 is a schematic structural view of a Bluetooth audio ceiling light provided by the present disclosure;
FIG. 2 is a block diagram of the Bluetooth audio ceiling light provided by the present disclosure;
FIG. 3 is a schematic connection view of a control module provided by the present disclosure;
FIG. 4 is a schematic structural view of a Bluetooth control circuit provided by the present disclosure;
FIG. 5 is a schematic structural view of a light-emitting unit provided by the present disclosure;
FIG. 6 is a schematic structural view of a power driving unit provided by the present disclosure;
FIG. 7 is a schematic structural view of a Bluetooth power supply module provided by the present disclosure.

### DETAILED DESCRIPTION

For a clearer understanding of the technical features, objectives and effects of the present disclosure, the specific embodiments of the present disclosure will be described in detail below with reference to the accompanying drawings. It should be understood that the following descriptions are merely specific descriptions of the embodiments of the present disclosure, and should not be used to limit the protection scope of the present disclosure.

The present disclosure provides a Bluetooth audio ceiling light 100, through a Bluetooth mesh control technology used in the LED ceiling light to realize a free networking, by adopting a terminal intelligent controller and a remote controller to remote control the ceiling light to realize functions such as light adjusting, toning, music-controlling colors, and so on, to satisfy different needs of users, provide a strong operability and a good experience.

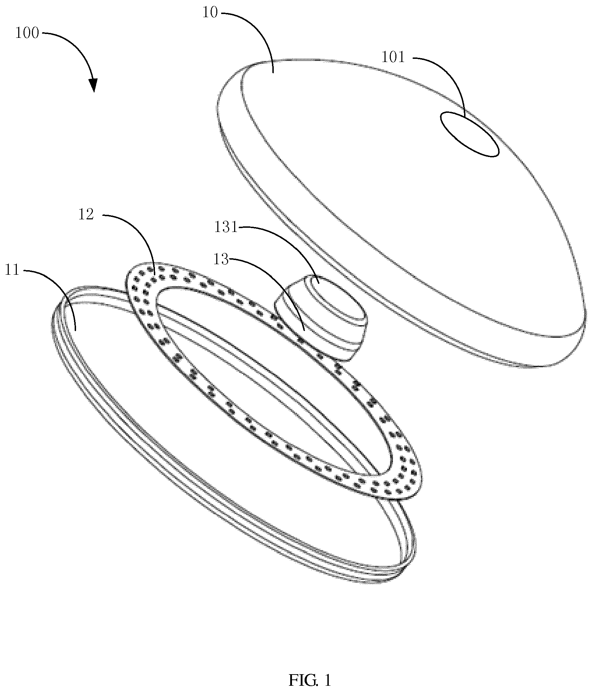

Referring to FIG. 1, FIG. 1 is a schematic structural view of a Bluetooth audio ceiling light according to the present disclosure. The Bluetooth audio ceiling light 100 includes a mask 10, a bottom board 11, a light board 12 and a Bluetooth audio housing 13.

An opening 101 is defined at a center axis of the mask 10. The bottom board 11 is connected to the mask 10 to form an accommodating cavity. The light board 12 is disposed in the accommodating cavity and in contact with an inner side of the bottom board 11. A sound hole 131 is defined at an upper side of the Bluetooth audio housing 13. An outer edge of the acoustic hole 131 is attached to an edge of the opening 101. A lower side of the Bluetooth audio housing 13 is connected to the inner side of the bottom board 11.

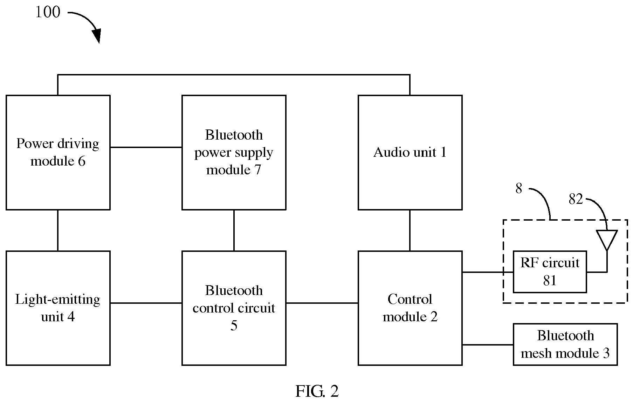

Referring to FIG. 2, FIG. 2 is a block diagram of a Bluetooth audio ceiling light 100 according to the present disclosure. The Bluetooth audio ceiling light 100 further includes an audio unit 1, a control module 2, a Bluetooth mesh module 3, a light-emitting unit 4, a Bluetooth control circuit 5, a power driving module 6, and Bluetooth power supply module 7.

The control module 2 is disposed inside the Bluetooth audio housing 13. The Bluetooth mesh module 3 is configured for receiving an external control signal via Bluetooth and is coupled to the control module 2. The audio unit 1 is disposed in the Bluetooth audio housing 13, adjacent to the acoustic hole 131, and coupled to the control module 2. The light-emitting unit 4 is disposed on the light board 12. The Bluetooth control circuit 5 is configured for controlling the light-emitting unit 4. The Bluetooth control circuit 5 is coupled to the control module 2 and the light-emitting unit 4. The power source driving unit 6 is configured for connecting to the utility power and providing a direct current. The power source driving unit 6 is disposed in the Bluetooth audio housing 13 and coupled to the light-emitting unit 4. The power supply unit 7 is configured for decreasing a voltage of the DC of the power source driving unit 6. The power supply unit 7 is disposed inside the Bluetooth audio housing 13 and coupled to the power source driving unit 7, the control module 2, and the audio unit 1. That is, the audio unit 1, the control module 2, the Bluetooth mesh module 3, the Bluetooth control circuit 5, the power source driving unit 6, and the power supply unit 7 are integrated inside the Bluetooth audio housing 13. The audio unit 1 emits sound through the sound hole 131 to achieve the effect of playing a sound (such as music) in the ceiling light. In addition, the shell of the acoustic hole 131 can be provided in a shape matching the opening 101 so as to ensure that the outer edge of the sound hole 131 is in close contact with the edge of the opening 101.

The light board 12 and the Bluetooth audio housing 13 are fastened to the inner side of the bottom board 11 by screws (not shown).

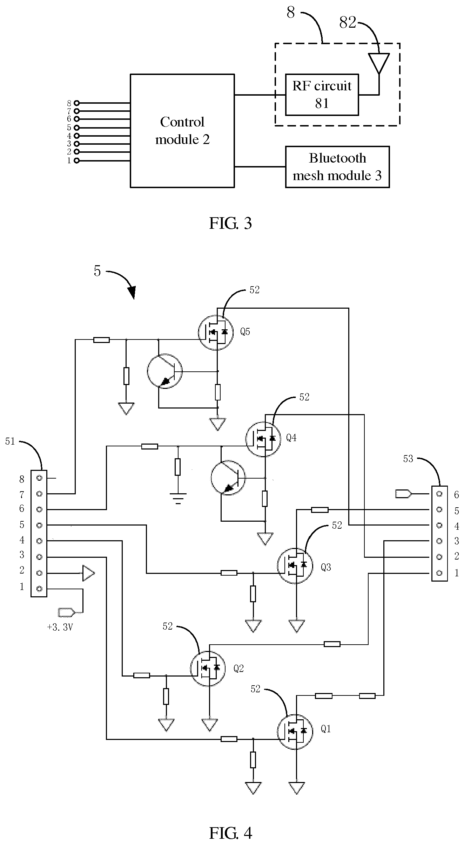

Referring to FIG. 3, FIG. 3 is a schematic connection view of the control module 2 according to the present disclosure. The control module 2 includes eight output pins and is connected to the radio frequency (RF) module 8 and the Bluetooth mesh module 3. The control module 2 can have a built-in data memory (SRAM) with 16KB storage capacity, and can be embedded with a 32-bit high-performance MCU having a 48 MHz maximum clock signal. The powerful storage capability can provide sufficient capacity to write controlling programs thereby achieving varied control functions.

The RF module 8 can include a RF circuit 81 and a RF antenna 82. The RF circuit 81 is coupled to the control module 2. The RF antenna 82 is coupled to the RF circuit 81.

Referring to FIG. 4, FIG. 4 is a schematic structural view of a Bluetooth control circuit 5 according to the present disclosure. The Bluetooth control circuit 5 includes a first Bluetooth welding pad 51, a plurality of MOS tubes 52, and a second Bluetooth welding pad 53.

The first Bluetooth welding pad 51 is coupled to a plurality of pins of the control module 2 and is coupled to the Bluetooth power supply module 7. The first Bluetooth welding pad 51 also includes eight terminals respectively connected to the eight pins of the control module 2, wherein the terminal 1 of the first Bluetooth welding pad 51 also connected to the Bluetooth power supply module 7 to access the +3.3 V voltage.

The plurality of MOS tubes 52 are respectively coupled to the plurality of terminals of the first Bluetooth welding pad 51. The plurality of MOS tubes 52 are Q1 - Q5 in FIG. 3.

The second Bluetooth welding pad 53 is coupled to the light-emitting unit 4. The MOS tubes 52 are respectively coupled to a plurality of terminals of the second Bluetooth welding pad 53. Q1-Q5 are connected to the terminals 1-5 of the second Bluetooth welding pad 53. The terminals 6 are connected to the power driving module 66 for accessing the operating voltage.

The functions of the Bluetooth control circuit 5 are as follows. After the Bluetooth control circuit 5 works, the internal MCU (i.e., the control module 2) receives the instruction of the intelligent terminal device. The control module 2 outputs five PWM dimming and RGB signals to control the turn-off and turn-on times of the five MOS tubes, Q1, Q2, Q3, Q4, Q5.

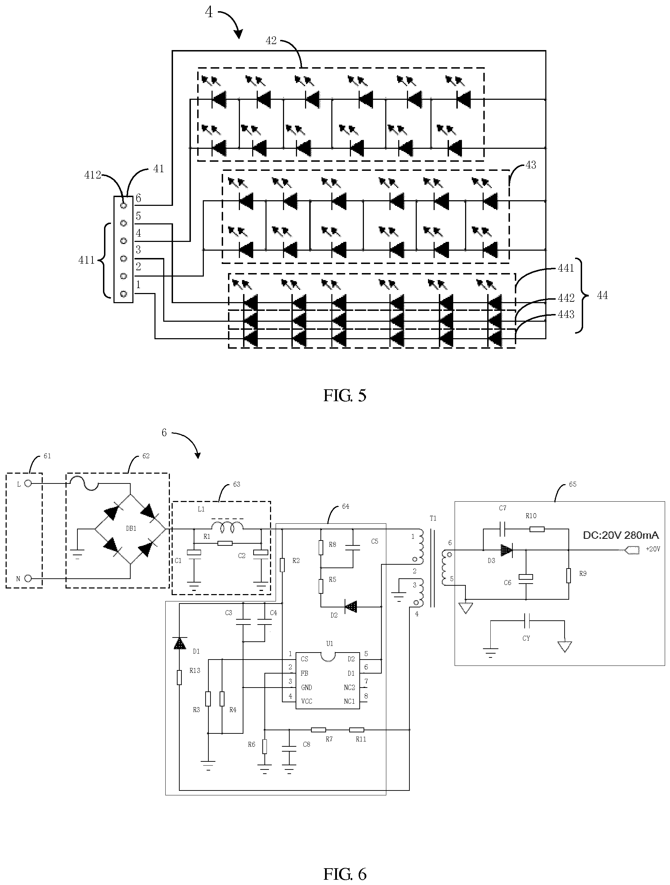

Referring to FIG. 5, FIG. 5 is a schematic structural view of the light-emitting unit 4 in the present disclosure. The light-emitting unit 4 includes a cell welding pad 41, a plurality of cold color temperature LED monochromatic lights 42, a plurality of warm color temperature LED monochromatic lights 43, and a plurality of RGB lights 44.

Each RGB light 44 includes an R light 441, a G light 442, and a B light 443. The cell welding pad 41 includes a plurality of cathode terminals 411 and one anode terminal 412. The plurality of cathode terminals 411 and the anode terminal 412 are respectively coupled to the second Bluetooth welding pad 53. The plurality of cathode terminals 411 are respectively coupled to one ends of the plurality of cold color temperature LED monochromatic lights 42, the plurality of warm color temperature LED monochromatic light 43, the plurality of R lights 441, the plurality of G lights 442, and the plurality of B lights 443. The anode terminal 412 is coupled to the power driving module 6, and is coupled to the other ends of the plurality of cold color temperature LED monochromatic lights 42, the plurality of warm color temperature LED monochromatic lights 43, the plurality of R lights 441, the plurality of G lights 442, and the plurality of B lights 443. The terminals 1-5 (i.e., the cathode terminals 411) of the cell welding pad 41 is connected to the terminals 1-5 of the second Bluetooth welding pad 53. The terminal 6 (i.e., the anode terminal 412) of the cell welding pad 41 is connected to the terminal 6 of the second Bluetooth welding pad 53 to connect to the operating voltage.

The drain electrode of each of the five MOS tubes 52 is respectively connected to the cathodes of the R light 441, the G light 442, the B light 443, the cold color temperature LED monochrome light 42, and the warm color temperature LED monochrome light 43 in the ultrathin ceiling light. The anode of the light-emitting unit 4 is directly connected to the output positive electrode of the power driving module 6, that is, connected to the terminal 6 of the cell welding pad 41. The Bluetooth control circuit 5 controls the working status of each LED light string by receiving instructions from the intelligent terminal device so as to control the changes of color temperature and brightness of the LED and the change of colors so as to realize dimming and color adjusting.

The light-emitting unit 4 is adhered on a flexible PCB board and adhered to the inner wall of the ultra-thin ceiling light by an adhesive thermal silica gel. In one embodiment, the light-emitting unit 4 is disposed on the inner wall of the light board 12. A side emission of light is realized by a light guide plate 14, a reflection paper 15, and a sponge pressure pad 16. The light-emitting unit 4 can be composed by 3528 type of RGB light beads with six pins and 2835 type of white light beads each has 0.2 W.

Referring to FIG. 6, FIG. 6 is a schematic structural view of a power driving module 6 according to the present disclosure. The power driving module 6 includes an AC input terminal 61, a rectification circuit 62, a filter circuit 63, a drive control circuit 64, and a DC output circuit 65.

The AC input terminal 61 is configured for access to 200-240V utility power.

The rectification circuit 62 is coupled to the AC input terminal 61.

The filter circuit 63 is coupled to the rectification circuit 62.

The drive control circuit 64 is coupled to the filter circuit 63.

The DC output circuit 65 is coupled to the drive control circuit 64.

U1 in the drive control circuit 64 is an integrated package isolated LED drive control IC in type of FT838MBD. The DC output circuit 65 is a subsequent circuit providing a stable voltage and current output. The detailed working process is that when the whole power source is connected to the AC 220V utility power, it is rectified through a bridge reactor DB1 (that is, the rectifying circuit 62) and then passed through the π-type filter formed by C1, C2, and L1. Since the drive control circuit 64 is internally integrated with switch tube, the logic circuit inside the drive control circuit 64 controls the on and off of the switch tube. A transformer realizes a conversion of the electromagnetic energy and the drive control circuit 64 controls the stable voltage and current output.

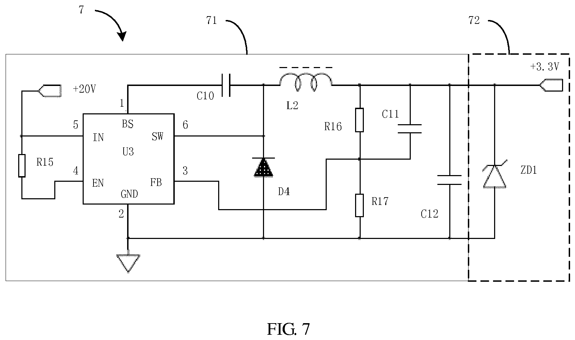

Referring to FIG. 7, FIG. 7 is a schematic structural view of a Bluetooth power supply module 7 provided by the present disclosure. The Bluetooth power supply module 7 includes a voltage decreasing buck circuit 71 and a voltage regulating circuit 72.

The voltage decreasing buck circuit 71 is coupled to the DC output circuit 65.

The voltage regulating circuit 72 is coupled to the Bluetooth control circuit 5.

Wherein, a type of the U3 in the voltage decreasing buck circuit 71 is SI3116, the voltage decreasing buck circuit 71 has a function of decreasing the 20V voltage output from the power driving module 6 down to a constant 3.3V voltage, including a 3.3V voltage regulating diode ZD1 to accurately supply power to the Bluetooth module. The general working process of the circuit is as follows. When the 5-pin of U3 is powered, U3 starts to work properly, and then the duty cycle is adjusted by an external divider resistor connected to 3-pin, which is to regulate the output voltage of 3.3V, wherein D4 of a peripheral circuit of U3 is a free-wheeling diode, and electrolytic capacitor C12 provides energy.

Various operations of the embodiments are provided herein. In one embodiment, one or the described operations may constitute one or computer-readable instructions stored in a computer-readable medium that, when executed by an electronic device, will cause the computing device to perform the described operations. The order in which some or all of the operations are described should not be construed as to imply that the operations must be order dependent. Those skilled in the art will understand an alternative ordering that has the benefit of this description. Moreover, it should be understood that not all operations need to be present in every embodiment provided herein.

Moreover, the term "preferred" as used herein is intended to serve as an example, embodiment, or illustration. Any aspect or design described as "preferred" need not be construed as advantageous over other aspects or designs. In contrast, the use of the term "preferred" is intended to provide concepts in a concrete manner. The term "or" as used in this application is intended to mean an inclusive "or" rather than an exclusive "or." That is, unless specified otherwise or clear from the context, "X employs A or B" means naturally include any one of the permutations. That is, "X using A or B" is satisfied in any of the foregoing examples if X uses A; X uses B; or X uses both A and B.

Moreover, while the disclosure has been shown and described with respect to one or more implementations, those skilled in the art will readily recognize that modifications and adaptations are based on a reading and understanding of the specification and drawings. The disclosure includes all such modifications and variations, and is limited only by the scope of the claims. In particular regard to the various functions performed by the above described components (e.g., elements, resources, etc.), the terms used to describe such components are intended to correspond with the specified functions (e.g., that are functionally equivalent) that perform the components. Any of the components, unless otherwise indicated, are structurally identical to the disclosed structure that performs the functions in the exemplary implementations of the present disclosure shown herein. In addition, while a particular feature of the disclosure may have been disclosed with respect to only one of several implementations, such feature may be other than one or other features of other implementations as may be desirable and advantageous for a given or particular application combination. Also, to the extent that the terms "include", "have", "comprise" or variations thereof are used in either the detailed description or the claims, such terms are intended to be inclusive in a similar manner to the term "comprising."

In summary, although the present disclosure has been disclosed by the preferred embodiments, the above preferred embodiments are not intended to limit the present disclosure. Those skilled in the art may make various modifications without departing from the spirit and scope of the present disclosure. Therefore, the protection scope of the present disclosure is subject to the scope defined by the claims.

## Claims

1. A Bluetooth audio ceiling light, **characterized by** comprising:
a mask defining an opening at a central axis of the mask;
a bottom board connected to the mask to form an accommodating cavity;
a light board disposed in the accommodating cavity and in contact with an inner side of the bottom board;
a Bluetooth audio housing, an upper side of the Bluetooth audio housing defining an acoustic hole, an outer edge of the acoustic hole being attached to an edge of the opening, and a lower side of the Bluetooth audio housing being connected to the inner side of the bottom board.

2. The Bluetooth audio ceiling light of claim 1, **characterized by** further comprising:
a control module disposed in the Bluetooth audio housing;
a Bluetooth mesh module configured for receiving an external control signal via Bluetooth, coupled to the control module;
an audio unit disposed inside the Bluetooth audio housing and adjacent to the acoustic hole, and coupled to the control module;
a light-emitting unit disposed on the light board;
a Bluetooth control circuit configured for controlling the light-emitting unit, coupled to the control module and the light-emitting unit.

3. The Bluetooth audio ceiling light of claim 1, **characterized by** further comprising:
a power source driving unit configured for connecting to a utility power and providing a direct current, disposed inside the Bluetooth audio housing, and coupled to the light-emitting unit;
a power supply unit configured for decreasing a voltage of the direct current of the power source driving unit, disposed inside the Bluetooth audio housing, and coupled to the power source driving unit, the control module, and the audio unit.

4. The Bluetooth audio ceiling light of claim 3, **characterized in that** the Bluetooth control circuit comprises:
a first Bluetooth welding pad coupled to a plurality of pins of the control module and coupled to a Bluetooth power module;
a plurality of MOS tubes respectively coupled to a plurality of terminals of the first Bluetooth welding pad;
a second Bluetooth welding pad coupled to the light-emitting unit, the plurality of MOS tubes are respectively coupled to a plurality of terminals of the second Bluetooth welding pad.

5. The Bluetooth audio ceiling light of claim 4, **characterized in that** the light-emitting unit comprises a cell welding pad, a plurality of cold color temperature LED monochromatic lights, a plurality of warm color temperature LED monochromatic lights, and a plurality of RGB lights;
each RGB light comprises a R light, a G light, and a B light;
the cell welding pad comprises a plurality of cathode terminals and one anode terminal, the plurality of cathode terminals and the anode terminal are respectively coupled to the second Bluetooth welding pad; the plurality of cathode terminals are respectively coupled to one ends of the plurality of cold color temperature LED monochromatic lights, the plurality of warm color temperature LED monochromatic lights, the plurality of R lights, the plurality of G lights, and the plurality of B lights; the anode terminal is coupled to the power source driving unit, and coupled to another ends of the plurality of cold color temperature LED monochromatic lights, the plurality of warm color temperature LED monochromatic lights, the plurality of R lights, the plurality of G lights, and the plurality of B lights.

6. The Bluetooth audio ceiling light of claim 2, **characterized by** further comprising a radio frequency module coupled to the control module.

7. The Bluetooth audio ceiling light of claim 6, **characterized in that** the radio frequency module comprises:
a radio frequency circuit coupled to the control module; and
a radio frequency antenna coupled to the radio frequency circuit.

8. The Bluetooth audio ceiling light of claim 3, **characterized in that** the power source driving unit comprises:
an alternating current input end configured for connecting to the utility power;
a rectification circuit coupled to the alternating current input end;
a filter circuit coupled to the rectification circuit;
a drive control circuit coupled to the filter circuit; and
a direct current output circuit coupled to the drive control circuit.

9. The Bluetooth audio ceiling light of claim 8, **characterized in that** the power supply unit comprises:
a voltage decreasing buck circuit coupled to the direct current output circuit; and
a voltage regulating circuit coupled to the control module.

10. The Bluetooth audio ceiling light of claim 1, **characterized in that** the light board and the Bluetooth audio housing are fastened to the inner side of the bottom board by screws.
